# EUROPEAN PATENT APPLICATION

(11) **EP 4 411 899 A1**
(43) Date of publication of application: **07.08.2024**
(21) Application number: 22949732.6
(22) Date of filing: 05.07.2022
(51) Int. Cl.: H01M 4/66, H01M 10/056

(54) **SECONDARY BATTERY, BATTERY MODULE, BATTERY PACK, AND ELECTRICAL DEVICE**

(71) Applicant: Contemporary Amperex Technology Co., Limited, Ningde, Fujian 352100 (CN)
(72) Inventor: QIN, Meng, Ningde, Fujian 352100 (CN); GUAN, Yingjie, Ningde, Fujian 352100 (CN); MA, Qingyan, Ningde, Fujian 352100 (CN); YANG, Huiling, Ningde, Fujian 352100 (CN); WEN, Yan, Ningde, Fujian 352100 (CN); HUANG, Qisen, Ningde, Fujian 352100 (CN)
(74) Representative: Gong, Jinping
(86) International application number: PCT/CN2022/103814
(87) International publication number: WO 2024/007143

(57) **Abstract**

Provided is a secondary battery including a positive electrode plate, a negative electrode plate, and an electrolyte. The positive electrode plate includes a positive current collector and a positive active material layer arranged on the positive current collector, and the positive active material layer contains a sodium ion active material. The negative electrode plate includes a negative current collector and a metal film layer arranged on at least one surface of the negative current collector. A nucleation overpotential of sodium on the negative electrode plate is smaller than or equal to 35 mV The electrolyte is arranged between the positive electrode plate and the negative electrode plate, and the electrolyte contains a sodium borate.

## Description

### TECHNICAL FIELD

The present disclosure relates to the technical field of secondary batteries, and more particularly, to a secondary battery, a battery module, a battery pack, and an electric device.

### BACKGROUND

A sodium ion battery is a secondary battery operated by moving sodium ions between a positive electrode and a negative electrode, and it has a working principle and a manufacturing process similar to that of a lithium ion battery. Compared with the lithium ion battery, an electrode material used in the sodium ion battery is mainly sodium salt, and it has advantages of low cost, rich resources and the like. However, since sodium ions are larger than lithium ions, an energy density of the sodium ion battery has a relatively large difference compared with the lithium ion battery. The negative electrode-free lithium ion battery employs sodium metal deposited on a negative current collector during a charging and discharging as a negative electrode. Therefore, the sodium ion battery can be effectively improved. However, the sodium ion battery is poor in circulation performance, making it difficult to be applied to practice.

### SUMMARY

Based on the above problems, embodiments of the present disclosure are to provide a secondary battery, a battery module, a battery pack, and an electric device, which can inhibit growth of sodium dendrites and improve circulation performance of the secondary battery.

A first aspect of the present disclosure provides a secondary battery, including: a positive electrode plate including a positive current collector and a positive active material layer arranged on the positive current collector, in which the positive active material layer contains a sodium ion active material; a negative electrode plate including a negative current collector and a metal film layer arranged on at least one surface of the negative current collector, in which a nucleation overpotential of sodium on the negative electrode plate is smaller than or equal to 35 mV, and optionally, the nucleation overpotential of the sodium on the negative electrode plate is smaller than or equal to 30 mV; and an electrolyte arranged between the positive electrode plate and the negative electrode plate, in which the electrolyte contains a sodium borate.

In the technical solution of the embodiment of the present disclosure, the positive active material layer of the positive electrode plate contains the sodium ion active material, and the negative electrode plate has metal. Further, the nucleation potential of sodium is smaller than or equal to 35 mV, and the electrolyte contains sodium borate. The metal film layer has a relatively low overpotential for metal sodium, and cooperates with the sodium borate in the electrolyte, to induce sodium to be uniformly deposited, thereby inhibiting growth of the sodium dendrites, which in turn greatly improves the circulation performance of the secondary battery.

In some embodiments, the metal film layer includes at least one metal selected from aluminum, nickel, chromium, bismuth, tin, indium, and antimony, and optionally, the metal film layer includes at least one metal selected from aluminum, nickel, and chromium, and optionally, the metal film layer includes an alloy composed of at least two of aluminum, nickel, chromium, bismuth, tin, indium, and antimony.

The above metal has a relatively low overpotential for the metal sodium, which facilitates uniform deposition of the metal sodium on the metal film layer

In some embodiments, a thickness of the metal film layer ranges from 10 nm to 300 nm, and optionally, the thickness of the metal film layer ranges from 30 nm to 200 nm.

The metal film layer with the nanoscale thickness can ensure a relatively high energy density while inhibiting sodium dendrites and improving the circulation performance.

In some embodiments, the metal film layer is prepared on the at least one surface of the negative current collector by using magnetron sputtering or evaporation deposition.

The uniformity and compactness of the metal film layer prepared by using magnetron sputtering or evaporation deposition are good, and the uniformity of the sodium metal deposition can be further improved.

In some embodiments, the sodium borate includes at least one of sodium difluoroborate, sodium tetrafluoroborate, sodium dioxalate borate, sodium difluorooxalate borate, sodium tetraphenylborate, sodium tetracyanoborate, sodium tetra(trifluoromethyl)borate, sodium bis(trifluoromethyl)difluoroborate, sodium pentafluoroethyl trifluoroborate, sodium dicyanooxalate borate, sodium methoxytricyanoborate, sodium ethoxytricyanoborate, sodium tetramethoxyborate, sodium tetraethoxyborate, and sodium cyanotris(2,2,2-trifluoroethyl)borate, and optionally, the sodium borate includes at least one of sodium difluorooxalate borate and sodium dioxalate borate.

Boric acid anions of the sodium borate and the metal film layer of the negative electrode plate cooperate with each other, and a solid electrolyte interface (SEI) film can be formed on the surface of the negative electrode plate. Thus, sodium deposition kinetics is improved, and uniform deposition of sodium is facilitated.

In some embodiments, the electrolyte is an electrolyte solution, and optionally, a solvent in the electrolyte includes an ether solvent.

Ether solvent molecules can construct a stable electrode-electrolyte interface on the surface of the negative electrode plate, to form a stable solid electrolyte interface (SEI) film and reduce electrochemical polarization.

In some embodiments, the ether solvent includes at least one of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether, and optionally, the ether solvent includes ethylene glycol dimethyl ether.

In some embodiments, in the electrolyte, a molar concentration of the sodium borate ranges from 0.05 mol/L to 8 mol/L, and optionally, the molar concentration of the sodium borate ranges from 0.1 mol/L to 2 mol/L.

Generally, the molar concentration of the sodium salt in the electrolyte ranges from 0.5 mol/L to 8 mol/L, and in the present disclosure, the sodium borate may be used as main salt or an additive in the electrolyte.

In some embodiments, the electrolyte further includes at least one of sodium perchlorate, sodium hexafluorophosphate, sodium hexafluoroarsenate, sodium trifluoroacetate, sodium trifluoromethanesulfonate, sodium bis(fluorosulfonyl)imide, and sodium bis(trifluoromethanesulfonyl)imide.

In a second aspect, embodiments of the present disclosure are further to provide a battery module including the secondary battery described above.

In a third aspect, embodiments of the present disclosure are further to provide a battery pack including the battery module described above.

In a fourth aspect, embodiments of the present disclosure are further to provide an electric device. The electric device includes at least one of the secondary battery described above, the battery module described above, and the battery pack described above. The secondary battery is configured to supply electric energy.

Details of one or more embodiments of the present disclosure are set forth in the following drawings and description, and other features, objects, and advantages of the present disclosure will become apparent from the description, drawings, and claims.

### BRIEF DESCRIPTION OF THE DRAWINGS

FIG. 1 is a schematic view of a secondary battery according to an embodiment of the present disclosure.
FIG. 2 is an exploded view of a secondary battery according to an embodiment of the present disclosure shown in FIG. 1.
FIG. 3 is a schematic view of a battery module according to an embodiment of the present disclosure.
FIG. 4 is a schematic view of a battery pack according to an embodiment of the present disclosure.
FIG. 5 is an exploded view of a battery pack according to an embodiment of the present disclosure shown in FIG. 4.
FIG. 6 is a schematic view of an electric device using a secondary battery as a power supply according to an embodiment of the present disclosure.

### Description of reference signs of the drawings:

1 battery pack; 2 upper box body; 3 lower box body; 4 battery module; 5 secondary battery; 51 housing; 52 electrode assembly; 53 cover plate; 6 electric device.

In order to better describe and illustrate those embodiments and/or examples disclosed herein, reference may be made to one or more of the accompanying drawings. Additional details or examples for describing the drawings should not be considered limiting of the scope of any of the disclosed inventions, presently described embodiments and/or examples, and the best modes of these presently understood inventions.

### DESCRIPTION OF EMBODIMENTS

In order to facilitate understanding of the present disclosure, the present disclosure is described more fully below with reference to the related drawings. Preferred embodiments of the present disclosure are given in the drawings. However, the present disclosure may be implemented in many different forms and is not limited to the embodiments described herein. Conversely, a purpose of providing these embodiments is to make understanding of the disclosed content of the present disclosure more thorough and comprehensive.

Unless otherwise defined, all technical and scientific terms used herein have the same meaning as commonly understood by one skilled in the technical field of the present disclosure. The terminology used herein in the specification of the present disclosure is for the purpose of describing specific embodiments only and is not intended to limit the present disclosure. As used herein, the term "and/or" includes any and all combinations of one or more of the associated listed items.

Embodiments of the present disclosure are to provide a secondary battery, a battery module using the secondary battery, a battery pack, and an electric device. The secondary battery is suitable for various electric devices using batteries, such as a mobile phone, a portable equipment, a notebook computer, a battery car, an electric toy, an electric tool, an electric vehicle, a ship, a spacecraft, and the like. For example, the spacecraft includes an airplane, a rocket, a space shuttle, a spacecraft, and the like.

A secondary battery, a battery module, a battery pack, and an electric device of the present disclosure will be described below with reference to the accompanying drawings.

In an embodiment of the present disclosure, a secondary battery is provided. The secondary battery includes a positive electrode plate, a negative electrode plate, and an electrolyte. During charging and discharging of the battery, active ions are embedded and come off back and forth between the positive electrode plate and the negative electrode plate. The electrolyte can conduct the ions between the positive electrode plate and the negative electrode plate.

The negative electrode plate includes a negative current collector and a metal film layer arranged on at least one surface of the negative current collector. A nucleation overpotential of sodium on the negative electrode plate is smaller than or equal to 35 mV. Optionally, the nucleation overpotential of sodium on the negative electrode plate is smaller than or equal to 30 mV. The electrolyte contains the sodium borate.

Generally, active sodium ions on the positive electrode plate are embedded and come off back and forth between the positive electrode plate and the negative electrode plate. In this way, during the charging of the secondary battery, an electrochemical reaction where the sodium ions obtain electrons to be reduced to sodium metal occurs on the negative electrode. Thus, the negative electrode has a relatively high energy density. However, sodium metal deposition on the surface of the negative electrode plate is not uniform, making it easy to generate sodium dendrites, thereby affecting circulation performance of the secondary battery.

In the technical solution of the embodiment of the present disclosure, the positive active material layer of the positive electrode plate contains the sodium ion active material, the negative electrode plate has the metal, the nucleation overpotential is smaller than 35 mV, and the electrolyte contains the sodium borate. Thus, the metal film layer has a relatively low overpotential for the metal sodium, and cooperates with the sodium borate in the electrolyte, thereby inhibiting the growth of the sodium dendrites, which in turn greatly improves the circulation performance of the secondary battery.

As an example, the negative current collector has two surfaces opposite to each other in its own thickness direction, and the negative electrode film layer is arrange on one or both of the two opposite surfaces of the negative current collector.

In some embodiments, the negative current collector may be made of a metal foil or a composite current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, etc.) on the polymer material base-material (base-material such as polypropylene (PP), polyethylene terephthalate (PET), polybutylene terephthalate (PBT), polystyrene (PS), polyethylene (PE), etc.).

In some embodiments, the metal film layer includes at least one metal selected from aluminum, nickel, chromium, bismuth, tin, indium, and antimony. Further, the metal film layer includes at least one metal selected from aluminum, nickel, and chromium. In some embodiments, the metal film layer includes an alloy composed of at least two of aluminum, nickel, chromium, bismuth, tin, indium, and antimony. Optionally, the metal film layer includes a nickel-chromium alloy. The above metal has a relatively low overpotential for the metal sodium, which facilitates uniform deposition of the metal sodium on the metal film layer.

In some embodiments, a thickness of the metal film layer ranges from 10 nm to 300 nm. Optionally, the metal film layer has the thickness of 10 nm, 20 nm, 30 nm, 50 nm, 100 nm, 150 nm, 200 nm, 250 nm or 300 nm. Further, the thickness of the metal film layer ranges from 30 nm to 200 nm. The metal film layer with the nanoscale thickness can ensure a relatively high energy density while inhibiting sodium dendrites and improving the circulation performance. The metal film layer with too large thickness will reduce the energy density of the secondary battery, and the metal film layer with too small thickness will result in a poor sodium deposition uniformity of the surface of the negative electrode.

In some embodiments, the metal film layer is prepared on the surface of the negative current collector by using magnetron sputtering or evaporation deposition. The uniformity and compactness of the metal film layer prepared through the magnetron sputtering or the evaporation deposition are good, and the uniformity of the sodium metal deposition can be further improved.

### Positive electrode plate

The positive electrode plate includes a positive current collector and a positive active material layer arranged on at least one surface of the positive current collector. The positive active material layer includes a positive active material.

As an example, the positive current collector has two surfaces opposite to each other in a thickness direction thereof, and the positive active material layer is arranged on one or both of the two opposite surfaces of the positive current collector.

In some embodiments, the positive current collector may be a metal foil or a composite current collector. For example, as the metal foil, an aluminum foil can be adopted. The composite current collector may include a polymer material base layer and a metal layer formed on at least one surface of the polymer material base layer. The composite current collector can be formed by forming a metal material such as aluminum, aluminum alloy, nickel, nickel alloy, titanium, titanium alloy, silver, and silver alloy on a polymer material substrate. The polymer material base material includes a substrate such as polypropylene (PP), polyethylene terephthalate (PET), polybutylene terephthalate (PBT), polystyrene (PS), polyethylene (PE), and the like.

In some embodiments, the positive active material may employ a positive active material for the battery known in the art. As an example, the sodium ion active material may include at least one of sodium transition metal oxide, polyanionic compound, and Prussian blue compound. However, the present disclosure is not limited to these materials, and other traditional well-known materials that can be used as the positive active material of the sodium ion batteries may also be used.

As an optional technical solution in the present disclosure, in the sodium transition metal oxide, the transition metal may be at least one metal selected from Mn, Fe, Ni, Co, Cr, Cu, Ti, Zn, V, Zr, and Ce. The sodium transition metal oxide is, for example, Na_{X}MO₂, where M is one or more of Ti, V, Mn, Co, Ni, Fe, Cr, and Cu, where 0<x≤1.

As an optional technical solution of the present disclosure, the polyanionic compound may be a type of compound having sodium ions, transition metal ions, and tetrahedral (YO₄)ⁿ⁻ anion units. The transition metal may be at least one metal selected from Mn, Fe, Ni, Co, Cr, Cu, Ti, Zn, V, Zr, and Ce; Y can be at least one of P, S, and Si; and n represents a valence state of (YO₄)ⁿ⁻.

The polyanionic compound may also be a type of compound having sodium ions, transition metal ions, tetrahedral (YO₄)ⁿ⁻anion units, and halogen anions. The transition metal may be at least one metal selected from Mn, Fe, Ni, Co, Cr, Cu, Ti, Zn, V, Zr, and Ce; Y can be at least one of P, S, and Si, n represents the valence state of (YO₄)ⁿ⁻; and halogen may be at least one of F, Cl, and Br.

The polyanionic compound may also be a type of compound having sodium ions, tetrahedral (YO₄)ⁿ⁻anion units, polyhedral units (ZO_{y})^{m+}, and optional halogen anions. Y may be at least one of P, S, and Si, and n represents the valence state of (YO₄)ⁿ⁻; Z represents the transition metal, which may be at least one metal selected from Mn, Fe, Ni, Co, Cr, Cu, Ti, Zn, V, Zr, and Ce, and m represents the valence state of (ZO_{y})^{m+}; and the halogen may be at least one of F, Cl, and Br.

The polyanionic compound is at least one of NaFePO₄, Na₃V₂(PO4)₃ (sodium vanadium phosphate, NVP for short), Na₄Fe₃(PO₄)₂(P₂O₇), NaM'PO4F (M' is one or more of V, Fe, Mn, and Ni), and Na₃(VO_{y})₂(PO₄)₂F_{3-2y}(0≤y≤1).

The Prussian blue compound can be a type of compound having sodium ions, transition metal ions, and cyanide ions (CN'). The transition metal may be at least one metal selected from Mn, Fe, Ni, Co, Cr, Cu, Ti, Zn, V, Zr, and Ce. The Prussian blue compound is, for example, NaₐMe_{b}Me'_{c}(CN)₆, where Me, and Me' are each independently at least one of Ni, Cu, Fe, Mn, Co, and Zn, where 0<a≤2, 0<b<1, 0<c<1.

In some embodiments, the positive active material layer also optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorine-containing acrylate resin.

In some embodiments, the positive active material layer also optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared through dispersing components for preparing the positive electrode plate, such as the positive active material, the conductive agent, the binder, and any other components in a solvent (such as N-methyl pyrrolidone) to form positive electrode slurry; and applying the positive electrode slurry on the positive current collector, and obtaining the positive electrode plate through drying, cold pressing, and the like.

### Electrolyte

The electrolyte can conduct ions between the positive electrode plate and the negative electrode plate. The electrolyte disclosed by the present disclosure includes sodium borate. The type of the electrolyte is not specifically limited, and the electrolyte may be selected as desired. For example, the electrolyte may be in a liquid state, a gel state, or an all-solid state.

In some embodiments, the sodium borate includes at least one of sodium difluoroborate, sodium tetrafluoroborate (NaBF₄), sodium dioxalate borate, sodium difluorooxalate borate, sodium tetraphenylborate (NaB(C₆H₅)₄), sodium tetracyanoborate, sodium tetra (trifluoromethyl) borate, sodium bis(trifluoromethyl)difluoroborate, sodium pentafluoroethyl trifluoroborate, sodium dicyanooxalate borate, sodium methoxytricyanoborateborate, sodium thoxytricyanoborate, sodium tetramethoxyborate, sodium tetraethoxyborate, and sodium cyanotris(2,2,2-trifluoroethyl) borate.

Further, the sodium borate includes at least one of sodium difluorooxalate borate and sodium dioxalate borate.

Boric acid anions of the sodium borate and the metal film layer of the negative electrode plate cooperate with each other to form a solid electrolyte interface (SEI) film on the surface of the negative electrode plate, thereby improving sodium deposition kinetics, and facilitating uniform deposition of sodium. Therefore, the growth of the sodium dendrites can be inhibited, and the circulation performance of the secondary battery can be improved.

In some embodiments, the electrolyte is an electrolyte solution. Further, the solvent in the electrolyte includes an ether solvent. Ether solvent molecules can construct a stable electrode-electrolyte interface on the surface of the negative electrode plate, to form a stable solid electrolyte interface (SEI) film and reduce electrochemical polarization.

In some embodiments, the ether solvent includes at least one of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

Optionally, the ether solvent includes ethylene glycol dimethyl ether.

In some embodiments, in the electrolyte, a molar concentration of the borate sodium salt ranges from 0.05 mol/L to 8 mol/L. Optionally, the molar concentration of the borate sodium salt is 0.05 mol/L, 0.1 mol/L, 0.5 mol/L, 1 mol/L, 2 mol/L, 4 mol/L, 5 mol/L, 6 mol/L, or 8 mol/L. Further, the molar concentration of the sodium borate ranges from 0.1 mol/L to 2 mol/L.

Generally, the molar concentration of the sodium salt in the electrolyte ranges from 0.5 mol/L to 8 mol/L, and in the present disclosure, the sodium borate can be used as main salt or an additive in the electrolyte.

In some embodiments, the electrolyte further includes at least one of sodium perchlorate (NaClO₄), sodium hexafluorophosphate (NaPF₆), sodium hexafluoroarsenate (NaAsF₆), sodium trifluoroacetate (CF₃COONa), sodium trifluoromethanesulfonate (NaSO₃CF₃), sodium bis(fluorosulfonyl)imide (Na[(FSO₂)₂N]), and sodium bis(trifluoromethanesulfonyl)imide (Na[(CF₃SO₂)₂N]).

In some embodiments, the solvent in the electrolyte further includes at least one of ethylene carbonate, propylene carbonate, butylene carbonate, vinylene carbonate, fluoroethylene carbonate, methyl ethyl carbonate, dimethyl carbonate, diethyl carbonate, dipropyl carbonate, methyl propyl carbonate, ethyl propyl carbonate, gamma-butyrolactone, 1,3-propane sultone, methyl propionate, methyl butyrate, ethyl acetate, ethyl propionate, propyl propionate, ethyl butyrate, and dimethyl sulfoxide.

In some embodiments, the electrolyte further optionally includes an additive. For example, the additive may include a negative electrode film-forming additive and a positive electrode film-forming additive, and it may further include additives capable of improving certain performances of the battery, such as additives for improving an overcharge performance of the battery, additives for improving a high-temperature or low-temperature performance of the battery, and the like.

### Separator

In some embodiments, the secondary battery further includes a separator. A type of the separator is not particularly limited in the present disclosure, and any well-known porous structure separator with good chemical stability and mechanical stability may be selected.

In some embodiments, a material of the separator may be selected from at least one of glass fiber, non-woven fabric, polyethylene, polypropylene, and polyvinylidene fluoride. The separator may be a single-layer thin film or may be a multi-layer composite thin film, which is not particularly limited. When the separator is the multi-layer composite thin film, materials of the layers may be the same or different, which is not particularly limited in this regard.

In some embodiments, the positive electrode plate, the negative electrode plate, and the separator may be made into an electrode assembly through a winding process or a lamination process.

In some embodiments, the secondary battery may include an outer package. The outer package may be configured to encapsulate the electrode assembly and the electrolyte above.

In some embodiments, the outer package of the secondary battery may be a hard case, such as a hard plastic case, an aluminum case, a steel case, and the like. The outer package of the secondary battery may also be a soft package, such as a bag-type soft package. A material of the soft package may be plastic, and as for the plastic, polypropylene, polybutylene terephthalate, polybutylene succinate, and the like may be listed.

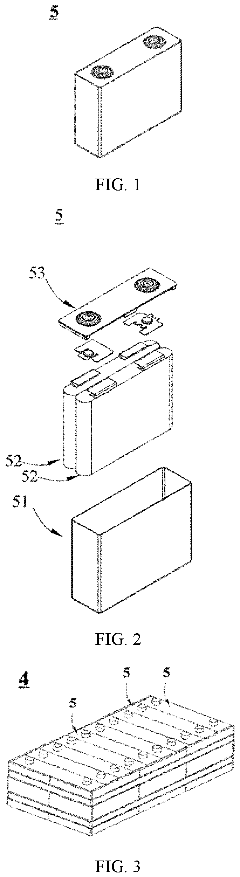

A shape of the secondary battery is not particularly limited in the present disclosure, and it may be cylindrical, square, or any other shape. For example, FIG. 1 is a secondary battery 5 of a square structure as an example.

In some embodiments, referring to FIG. 2, the outer package may include a housing 51 and a cover plate 53. The housing 51 may include a bottom plate and a side plate connected to the bottom plate, and the bottom plate and the side plate enclose to form an accommodating cavity. The housing 51 has an opening in communication with the accommodating cavity, and the cover plate 53 is arranged to cover the opening in order to close the accommodating cavity. The positive electrode plate, the negative electrode plate, and the separator may be formed as an electrode assembly 52 through a winding process or a lamination process. The electrode assembly 52 is encapsulated in the accommodating cavity. The electrolyte is infiltrated in the electrode assembly 52. The secondary battery 5 may include one or more electrode assemblies 52, and those skilled in the art may make a selection as descried.

In some embodiments, the secondary battery may be assembled into a battery module, and the battery module may include one or more secondary batteries, and specific number of of the secondary batteries may be selected by those skilled in the art based on an application and a capacity of the battery module.

FIG. 3 is an exemplary battery module 4. Referring to FIG. 3, in the battery module, a plurality of the secondary batteries 5 may be sequentially arranged along a length direction of the battery module 4. Certainly, they may also be arranged in any other manner. The plurality of the secondary batteries 5 may be further fixed by fasteners.

Optionally, the battery module 4 may further include an outing shell having an accommodation space, and the plurality of the secondary batteries 5 are accommodated in the accommodation space.

In some embodiments, the battery module as described above may also be assembled into a battery pack, and the battery pack may include one or more battery modules, and the specific number of the battery modules may be selected by those skilled in the art according to an application and a capacity of the battery pack.

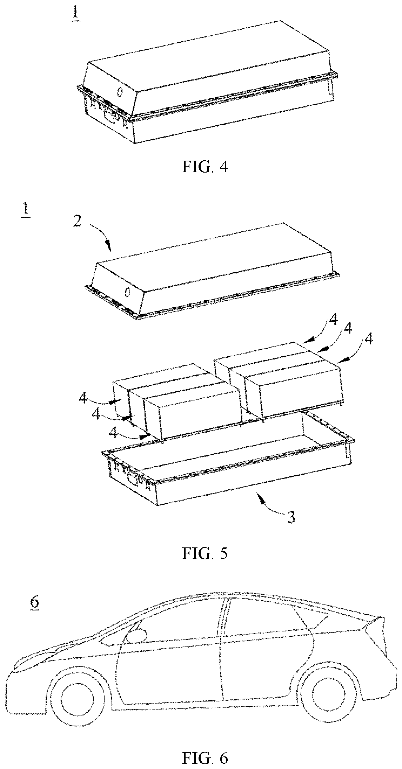

FIG. 4 and FIG. 5 shows an exemplary battery pack 1. Referring to FIG. 4 and FIG. 5, the battery pack 1 may include a battery box and a plurality of the battery modules 4 arranged in the battery box. The battery box includes an upper box body 2 and a lower box body 3, and the upper box body 2 is arranged to cover the lower box body 3 and form a closed space for accommodating the battery module 4. The plurality of the battery modules 4 may be arranged in the battery box in any manner.

In addition, the present disclosure further provides an electric device. The electric device includes at least one of the secondary battery, the battery module, and the battery pack according to the embodiments of the present disclosure. The secondary battery, the battery module, or the battery pack may be used as a power supply for the electric device, and may also be used as an energy storage unit of the electric device. The electric device may include a mobile device, an electric vehicle, an electrical train, a ship, a satellite, an energy storage system, and the like, and the present disclosure is not limited thereto. The mobile device may be, for example, a mobile phone, a notebook computer, etc. The electric vehicle may be, for example, a pure electric vehicle, a hybrid electric vehicle, a plug-in hybrid electric vehicle, an electric bicycle, an electric scooter, an electric golf cart, an electric truck, and the like, and the present disclosure is not limited thereto.

As the electric device, the secondary battery, the battery module or the battery pack may be selected as desired.

FIG. 6 is an exemplary electric device 6. The electric device 6 is a pure electric vehicle, a hybrid electric vehicle, a plug-in hybrid electric vehicle, and the like. In order to meet requirements of the electric device for high power and high energy density of the secondary battery, a battery pack or a battery module may be employed.

Another exemplary device may be a mobile phone, a tablet computer, a notebook computer, and the like. The device is usually required to be light and thin, and the secondary battery may be used as a power supply.

### Embodiments

Embodiments of the present disclosure will be described below. The embodiment described below is exemplary and only used for explaining the present disclosure, and it cannot be understood as limitation to the present disclosure. The specific techniques or conditions which are not specified in the embodiment are carried out in accordance with the techniques or conditions described in the literature in the art or in accordance with the specification of the product. The used reagents or instruments, which are not indicated with manufacturers, are all conventional products which can be commercially available.

Preparation of the positive electrode plate including: fully dissolving a 10 wt% polyvinylidene fluoride (PVDF) binder in N-methyl pyrrolidone (NMP); and adding 10 wt% of a carbon black conductive agent and 80 wt% of a positive active material (Na₄Fe₃(PO₄)₂(P₂O₇)) to prepare uniformly dispersed slurry. The slurry is uniformly applied on the surface of the aluminum foil and then transferred into a vacuum drying oven to be completely dried. The obtained plate is rolled and then punched to obtain the positive electrode plate.

Preparation of the negative electrode plate includes: depositing a metal film layer on a surface of a negative electrode copper current collector by using the magnetron sputtering method, and recording a type and a thickness of the metal film layer in Table 1. Specifically, the negative electrode copper current collector is placed in a vacuum chamber through a transmission mechanism. At the same time, a target material is placed in a metal steam generator arranged in the vacuum chamber. After a vacuum degree in the vacuum chamber reaches a threshold, the target material is continuously melted and evaporated in the metal steam generator to form metal steam, and the metal steam is sprayed at a flow rate of 500 ml/min (corresponding to the thickness 100 nm of the metal film layer in Embodiment 1), to allow the negative electrode copper current collector to be immersed in the metal steam. The vacuum degree may be achieved through a vacuum unit, and the vacuum degree is smaller than or equal to 8*10² Pa. in addition, the threshold of the vacuum degree may be achieved by setting parameters of the vacuum unit. The thickness of the metal film layer is controlled by controlling the flow rate of the metal steam. Specifically, when the thickness of the metal film layer is 10 nm, the spraying flow rate of the metal steam is 50 mL/min, and when the thickness of the metal film layer is 300 nm, the spraying flow rate of the metal steam is 1500 mL/min. A corresponding metal or alloy is selected as the target material based on the type of the metal film layer in Table 1. The duration for the magnetron sputtering may be controlled through a belt moving speed of the transmission mechanism, and when the flow window described above is determined, the belt moving speed is 300 m/min.

Preparation of the electrolyte includes: in an argon atmosphere glove box (H₂O<0.1ppm, O₂<0.1ppm), dissolving sodium salt in organic solvent of ethylene glycol dimethyl ether, uniformly stirring, to obtain the electrolyte, and recording a type and concentration of the sodium salt in Table 1.

A polypropylene film is used as as the separator.

Preparation of the secondary battery includes: laminating the positive electrode plate, the separator, and the negative electrode plate sequentially to locate the separator between the positive current collector and the negative current collector for the isolation; and injecting the electrolyte to assemble the secondary battery.

**Table 1 Composition of Secondary Batteries of Embodiment 1 to 15 and Comparative Examples 1 to 5**

| Number | Electrolyte | | Metal film layer | |
|---|---|---|---|---|
| | Type and concentration of sodium salt | Solvent | Type | Thickness (nm) |
| Embodiment 1 | 1.5M NaDFOB | ethylene glycol dimethyl ether | aluminum | 100 |
| Embodiment 2 | 1.5M NaDFOB | ethylene glycol dimethyl ether | nickel chromium (20wt%:80wt%) | 100 |
| Embodiment 3 | 1.5M NaDFOB | ethylene glycol dimethyl ether | chromium | 100 |
| Embodiment 4 | 1.5M NaDFOB | ethylene glycol dimethyl ether | nickel | 100 |
| Embodiment 5 | 1.5M NaDFOB | ethylene glycol dimethyl ether | bismuth | 100 |
| Embodiment 6 | 1.5M NaDFOB | ethylene glycol dimethyl ether | tin | 100 |
| Embodiment 7 | 1.5M NaDFOB | ethylene glycol dimethyl ether | indium | 100 |
| Embodiment 8 | 1.5M NaDFOB | ethylene glycol dimethyl ether | antimony | 100 |
| Embodiment 9 | 1.5M NaDFOB | ethylene glycol dimethyl ether | aluminum | 10 |
| Embodiment 10 | 1.5M NaDFOB | ethylene glycol dimethyl ether | aluminum | 300 |
| Embodiment 11 | 0.05M NaDFOB+ 1.45M NaPF₆ | ethylene glycol dimethyl ether | aluminum | 100 |
| Embodiment 12 | 0.1M NaDFOB+1.4M NaPF₆ | ethylene glycol dimethyl ether | aluminum | 100 |
| Embodiment 13 | 2M NaDFOB | ethylene glycol dimethyl ether | aluminum | 100 |
| Embodiment 14 | 8M NaDFOB | ethylene glycol dimethyl ether | aluminum | 100 |
| Embodiment 15 | 1.5M Sodium bis(oxalato)borate | ethylene glycol dimethyl ether | aluminum | 100 |
| Comparative Example 1 | 1.5M NaDFOB | ethylene glycol dimethyl ether | manganese | 100 |
| Comparative Example 2 | 1.5M NaPF₆ | ethylene glycol dimethyl ether | manganese | 100 |
| Comparative Example 3 | 1.5M NaDFOB | ethylene glycol dimethyl ether | / | / |
| Comparative Example 4 | 1.5M NaPF₆ | ethylene glycol dimethyl ether | / | / |
| Comparative Example 5 | 1.5M NaPF₆ | ethylene glycol dimethyl ether | aluminum | 100 |

Test will be described below.

As for the nucleation overpotential, the prepared secondary battery is charged to 100 µA at a constant current of 0.1C at a temperature of 25°C, and the obtained most negative potential is recorded as the nucleation overpotential.

As for the test of coulomb efficiency, the prepared secondary battery is charged to 3.7V at a constant current of 1/3C at the temperature of 25°C, and then charged at a constant voltage of 3.7 V until the current is reduced to 0.05C, to obtain a first charging capacity (Cc1), and then discharged to 2.5V at the constant current of 1/3C to obtain a first discharging capacity (Cd1), and the coulomb efficiency of the secondary battery is calculated in accordance with a formula as below.

The coulomb efficiency of the secondary battery = the first discharging capacity (Cd1)/the first charging capacity (Cc1).

As for the test of capacity retention, the secondary battery is charged to 3.7V at a constant current of 1C at the temperature of 25°C, then charged at the constant voltage of 3.7 V until the current is reduced to 0.05C, and discharged to 2.5V at the constant current of 1C, to obtain a first-circle discharging capacity (Cd1); and repeatedly charged and discharged to n-th circle, to obtain the discharging capacity after the secondary battery circulates n circles, which is recorded as Cdn, and the capacity retention rate of the secondary battery is calculated in accordance with a formula as below. The capacity retention rate = the discharging capacity after circulating n circles (Cdn)/the first-circle discharging capacity (Cd1).

As for the test of sodium dendrite formation, the secondary battery after circulating 100 circles in a glove box (argon atmosphere, H₂O<0.1ppm, O₂<0.1ppm) is disassembled, and it is determined whether the sodium dendrite is generated or not by observing a surface morphology of the negative electrode plate with naked eyes.

Test results of the secondary batteries in Embodiments 1 to 15 and Comparative Examples 1 to 5 are recorded in Table 2.

**Table 2 Electrochemical properties of the secondary batteries of Embodiments 1 to 15 and Comparative Examples 1 to 5**

| Number | Nucleation overpotential (mV) | Coulomb efficiency (%) | Capacity retention rate after circulating 100 circles (%) | Sodium dendrite condition |
|---|---|---|---|---|
| Embodiment 1 | 18 | 95.7 | 88.2 | None |
| Embodiment 2 | 20 | 94.2 | 87.1 | None |
| Embodiment 3 | 22 | 93.6 | 86.4 | None |
| Embodiment 4 | 23 | 92.3 | 85.2 | None |
| Embodiment 5 | 24 | 91.9 | 84.6 | None |
| Embodiment 6 | 24 | 91.6 | 84.1 | None |
| Embodiment 7 | 25 | 90.9 | 83.6 | None |
| Embodiment 8 | 25 | 90.5 | 83.1 | None |
| Embodiment 9 | 24 | 91.5 | 84.3 | None |
| Embodiment 10 | 25 | 91.1 | 84.0 | None |
| Embodiment 11 | 26 | 90.3 | 83.7 | None |
| Embodiment 12 | 23 | 92.9 | 86.5 | None |
| Embodiment 13 | 24 | 92.1 | 85.8 | None |
| Embodiment 14 | 29 | 88.4 | 81.2 | None |
| Embodiment 15 | 23 | 92.3 | 84.4 | None |
| Comparative Example 1 | 37 | 82.9 | 75.5 | Slight |
| Comparative Example 2 | 38 | 81.2 | 71.6 | Serious |
| Comparative Example 3 | 39 | 80.3 | 70.2 | Serious |
| Comparative Example 4 | 40 | 79.1 | 69.4 | Srious |
| Comparative Example 5 | 36 | 84.5 | 77.9 | Slight |

It can be seen from the related data of Table 2 that compared with the secondary batteries of Comparative Examples 1 to 5, the nucleation overpotential of the secondary battery in Embodiments 1 to 15 ranges from 18 mV to 29 mV, and after 100 circles of circulation, the sodium dendrite is not observed, the coulomb efficiency ranges from 88.4% to 95.7%, and the capacity retention rate ranges from 81.2% to 88.2% after 100 circles of circulation, which can effectively inhibit the generation of the sodium dendrite, and improve the circulation performance of the secondary battery.

It can be seen from Embodiments 1 to 10 that the metal film layer in the Embodiments 1 to 4 is aluminum, nickel, chromium, or nickel-chromium alloy, and the nucleation overpotential of the negative electrode plate is relatively low and only ranges from 18 mV to 29 mV. The coulomb efficiency ranges from 92.3% to 95.7%, indicating that during the charging and the discharging, irreversible loss of active sodium due to the sodium dendrite growth and the like is relatively small. After 100 circles of circulation, the capacity retention rate ranges from 85.2% to 88.2%, and the circulation performance is relatively good. Compared with the Embodiment 1, the thickness of the metal film layer in the Embodiment 9 is 10 nm, the thickness of the metal film layer in the Embodiment 10 is 300 nm, the coulomb efficiency and the capacity retention rate after 100 circles of circulation of the secondary battery in the Embodiments 9-10 are slightly lower than that of the secondary battery of Embodiment 1. Therefore, when the thickness of the metal film layer is controlled to range from 30 nm to 200 nm, the circulation performance of the secondary battery is better.

Embodiments 11 to 14 differ from Embodiment 1 in that molar concentration of the NaDFOB is different, and it can be seen from Embodiments 1 and 11 to 14 that the molar concentration of the sodium borate in the electrolyte also affects the nucleation overpotential of the negative electrode plate, and when the molar concentration of the sodium borate ranges from 0.1 mol/L to 2 mol/L, the circulation performance of the secondary battery is better.

The Comparative Example 4 is a traditional negative electrode-free sodium-ion battery, and the Comparative Example 2 differs from Comparative Example 4 in that the negative current collector has a manganese metal film layer. A difference between Comparative Example 1 and Comparative Example 2 is in that the sodium salt in the electrolyte is replaced with NaDFOB. A difference between the Comparative Example 3 and the Comparative Example 4 is in that the sodium salt in the electrolyte is replaced with NaDFOB. A difference between Comparative Example 5 and Comparative Example 4 is in that the negative current collector has an aluminum metal film layer. Compared with the secondary battery of the Comparative Example 4, the coulomb efficiency and the capacity retention rate after 100 circles of circulation of the secondary batteries of the Comparative Examples 1 to 3 and 5 are slightly improved. However, the sodium dendrite which can be observed by naked eyes still exist on the negative electrode plate, and the effect of inhibiting the growth of the sodium dendrite is relatively poor.

The various technical features of the embodiments described above may be combined arbitrarily. In order to make the description concise, not all possible combinations of the various technical features in the above embodiments are described. However, as long as there is no contradiction in the combinations of these technical features, all of these should be considered to be in the scope of the present specification.

The above embodiments only express several embodiments of the present disclosure, and the description thereof is relatively specific and detailed, and cannot be understood as a limitation on the scope of the present disclosure. It should be noted that for a person of ordinary skill in the art, a plurality of variations and improvements may be made without departing from the concept of the present disclosure, and these are all within the scope of the present disclosure. Therefore, the scope of the present disclosure shall be subject to the appended claims.

## Claims

1. A secondary battery, comprising:
a positive electrode plate comprising a positive current collector and a positive active material layer arranged on the positive current collector, the positive active material layer containing a sodium ion active material;
a negative electrode plate comprising a negative current collector and a metal film layer arranged on at least one surface of the negative current collector, a nucleation overpotential of sodium on the negative electrode plate being smaller than or equal to 35 mV, and optionally, the nucleation overpotential of the sodium on the negative electrode plate being smaller than or equal to 30 mV; and
an electrolyte arranged between the positive electrode plate and the negative electrode plate, the electrolyte containing a sodium borate.

2. The secondary battery according to claim 1, wherein the metal film layer comprises at least one metal selected from aluminum, nickel, chromium, bismuth, tin, indium, and antimony,
optionally, the metal film layer comprises at least one metal selected from aluminum, nickel, and chromium, and
optionally, the metal film layer comprises an alloy composed of at least two of aluminum, nickel, chromium, bismuth, tin, indium, and antimony.

3. The secondary battery according to claim 1 or 2, wherein a thickness of the metal film layer ranges from 10 nm to 300 nm, and
optionally, the thickness of the metal film layer ranges from 30 nm to 200 nm.

4. The secondary battery according to any one of claims 1 to 3, wherein the metal film layer is prepared on the at least one surface of the negative current collector by using magnetron sputtering or evaporation deposition.

5. The secondary battery according to any one of claims 1 to 4, wherein the sodium borate comprises at least one of sodium difluoroborate, sodium tetrafluoroborate, sodium dioxalate borate, sodium difluorooxalate borate, sodium tetraphenylborate, sodium tetracyanoborate, sodium tetra(trifluoromethyl)borate, sodium bis(trifluoromethyl)difluoroborate, sodium pentafluoroethyl trifluoroborate, sodium dicyanooxalate borate, sodium methoxytricyanoborate, sodium ethoxytricyanoborate, sodium tetramethoxyborate, sodium tetraethoxyborate, and sodium cyanotris(2,2,2-trifluoroethyl)borate, and
optionally, the sodium borate comprises at least one of sodium difluorooxalate borate and sodium dioxalate borate.

6. The secondary battery according to any one of claims 1 to 5, wherein the electrolyte is an electrolyte solution, and
optionally, a solvent in the electrolyte comprises an ether solvent.

7. The secondary battery according to claim 6, wherein the ether solvent comprises at least one of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether, and
optionally, the ether solvent comprises ethylene glycol dimethyl ether.

8. The secondary battery according to claim 6 or 7, wherein a molar concentration of the sodium borate in the electrolyte ranges from 0.05 mol/L to 8 mol/L, and
optionally, the molar concentration of the sodium borate ranges from 0.1 mol/L to 2 mol/L.

9. The secondary battery according to any one of claims 1 to 8, wherein the electrolyte further comprises at least one of sodium perchlorate, sodium hexafluorophosphate, sodium hexafluoroarsenate, sodium trifluoroacetate, sodium trifluoromethanesulfonate, sodium bis(fluorosulfonyl)imide, and sodium bis(trifluoromethanesulfonyl)imide.

10. A battery module, comprising the secondary battery according to any one of claims 1 to 9.

11. A battery pack, comprising the battery module according to claim 10.

12. An electric device, comprising at least one of the secondary battery according to any one of claims 1 to 9, the battery module according to claim 10, and the battery pack according to claim 11, wherein the secondary battery is configured to supply electrical energy.
